# EUROPÄISCHE PATENTSCHRIFT

(11) **EP 2 435 725 B1**
(45) Veröffentlichungstag und Bekanntmachung des Hinweises auf die Patenterteilung: **22.05.2013**
(21) Anmeldenummer: 10732242.2
(22) Anmeldetag: 28.05.2010
(51) Int. Cl.: F16D 69/04, F16D 13/68

(54) **REIBELEMENT**
FRICTION ELEMENT
ELÉMENT DE FRICTION

(30) Priorität: 29.05.2009 AT 8352009
(43) Veröffentlichungstag der Anmeldung: 04.04.2012
(73) Patentinhaber: Miba Frictec GmbH, 4661 Roitham (AT)
(72) Erfinder: MÜHLEGGER, Markus, A-4812 Pinsdorf (AT)
(74) Vertreter: Burger, Hannes
(86) Internationale Anmeldenummer: PCT/AT2010/000188
(87) Internationale Veröffentlichungsnummer: WO 2010/135757

(56) Entgegenhaltungen:
- EP-A1- 0 674 119
- WO-A1-2007/060391
- DE-A1- 2 112 189
- DE-A1- 4 023 836

## Beschreibung

Die Erfindung betrifft ein Verfahren zur Herstellung eines Reibelementes umfassend einen Reibbelag aus Sintermaterial, der auf einen Träger aufgebracht wird, wobei im Träger zumindest zwei Ausnehmungen zur Aufnahme je eines Verbindungselementes zur Montage des Trägers mit dem Reibbelag auf einem Trägerelement vorgesehen werden. Weiterhin betrifft die Erfindung einen Reibbelag aus Sintermaterial, aufweisend zumindest zwei voneinander beabstandete Aussparungen zur Aufnahme je eines Verbindungselementes zur Montage des Reibbelags auf einem Trägerelement sowie ein Reibelement umfassend einen Träger auf dem ein Reibbelag angeordnet ist. So ein Bremsbelag ist z.B aus EP-A-0 674 119 bekannt.

Reibbeläge aus Sintermaterial werden in der modernen Technik häufig benötigt, beispielsweise als Bremsbeläge oder Kupplungsbeläge (insbesondere für trockenlaufende Kupplungen) in der Kraftfahrzeugtechnik. Um die Eigenschaften des Reibbelags optimal an den benötigten Einsatzzweck anzupassen, werden verschiedene Materialien in veränderlichen Anteilen gemischt und anschließend mit einem an sich bekannten Sinterverfahren zu einem Bauteil gewünschter Form "verbacken".

Die gesinterten Reibbeläge werden hinsichtlich ihrer Eigenschaften in aller Regel in Richtung Reibkraft optimiert, sodass andere Eigenschaften eher schlecht ausgebildet sind. Beispielsweise können gesinterte Reibbeläge nur geringe Zug- und Biegekräfte aufnehmen, weswegen Reibbeläge zumeist auf Trägerplatten, beispielsweise aus Stahl, aufgebracht werden, um lange Standzeiten in einer Bremse oder einer Kupplung zu ermöglichen. Diese mit dem Reibbelag versehene Trägerplatte wird dann auf die Bremsscheibe oder die Kupplungsscheibe aufgenietet. Verschrauben ist prinzipiell denkbar, kommt aber für diesen Einsatzzweck weniger häufig zum Einsatz. Der Reibbelag dient also der primären Funktion einer Bremse oder einer Kupplung, also zum Übertragung eines Bremsmomentes oder eines Momentes zwischen Antriebs- und Abtriebsseite, während die Trägerschicht die Funktion hat, die Reibelemente mit der Kupplungsscheibe oder mit der Bremse zu verbinden.

Für die Vernietung hat jedes Trägerelement entsprechende Bohrungen, die je nach Ausfühnmg am Rand oder im Bereich des Reibelementes liegen. Befinden sich die Bohrungen im Bereich der Reibfläche, muss auch die Reibschicht eine entsprechende Bohrung zur Aufnahme des Nietkopfes erhalten. Dadurch bleibt zwischen den Nietlöchern ein teilweise sehr schmaler Bereich stehen. Zudem werden die Reibbeläge nach dem Sinterprozess zur besseren Anlage an der Kupplungsscheibe noch kaltverformt, das heißt die Teile werden nicht eben gepresst sondern konkav oder konvex. Dabei entstehen je nach Dicke der Reibbeläge vor allem im Bereich zwischen den Nietlöchern hohe Oberflächenspannungen die wiederum je nach Reibmaterial und Sinterverbund zu Rissen zwischen den Nietlöchern führen können.

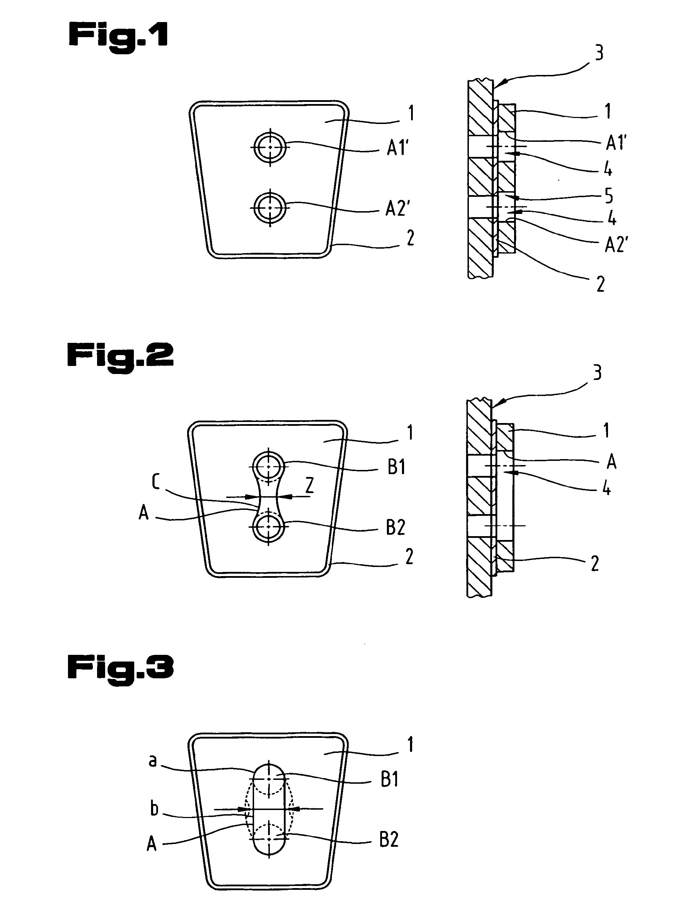

Die Fig. 1 zeigt dazu in Draufsicht und in Seitenansicht geschnitten ein Beispiel, bei dem ein Reibbelag 1 (hier ein einzelnes Segment eines Kupplungsbelages) auf einen Träger 2 aufgebracht ist. Im Reibbelag 1 sind zwei voneinander beabstandete Aussparungen A1' und A2', hier zylindrische Löcher, angeordnet, welche zur Aufnahme je eines Verbindungselementes, hier Nieten, zur Montage des Trägers 2 mit dem Reibbelag 1 auf einem Trägerelement 3, hier eine Kupplungsscheibe, das sich unterhalb bzw. seitlich des Trägers 2 befindet, vorgesehen sind. Die Aussparungen A1' und A2' weisen einen größeren Durchmesser auf als entsprechende Ausnehmungen 4 im Träger 2 und dem Trägerelement 3, sodass ein Bund 5 vorhanden ist, an dem die Verbindungselemente, also z.B. der Kopf der Nieten, zur Befestigung des Trägers 2 auf dem Trägerelement 3 anliegen. Zwischen den Aussparungen A1' und A2' sind die bereits erwähnten Risse angedeutet.

Die bei der Herstellung eines Reibbelags nach herkömmlichen Herstellungsverfahren im Bereich zwischen den Aussparungen für die Verbindungselemente häufig entstehenden Risse können im Betrieb des Reibbelags zu einem Abbröckeln desselben führen. Dies ist insofern von Nachteil als sich einerseits die wirksame Reibfläche und damit die zu übertragende Leistung verringert, andererseits können sich lose Teile in der Kupplung oder Bremse ablagern oder verklemmen und so deren Funktion beeinträchtigen. Auch können lose Teile durch die beim Bremsen und Kuppeln entstehenden, hohen Temperaturen und Drücke mit der intakten Oberfläche verbacken beziehungsweise verschweißen und diese so zerstören. Schließlich können sich die losen Teile auch mit der Gegenfläche verschweißen, wobei die dadurch entstehende Unebenheit, verbunden mit der Drehbewegung, den Bereich zwischen den Aussparungen noch weiter ausschleift.

Da Sicherheitsaspekte bei diesen Bauteilen eine große Rolle spielen, ist dies ein äußerst unerwünschter wenn nicht untragbarer Zustand, denn ein Versagen eines Kupplungsbelages und noch mehr eines Bremsbelags kann schwerwiegende Folgen haben und neben materiellem Schaden auch eine Gefahr für Leib und Leben darstellen.

Aufgabe der Erfindung ist es daher, einen verbesserten Reibbelag, bei dem die erwähnten Probleme nicht auftreten, sowie ein Verfahren zu dessen Herstellung anzugeben.

Die Aufgabe der Erfindung wird mit einem Verfahren nach dem Patentanspruch 1 gelöst, nämlich einem Verfahren zur Herstellung eines Reibelementes mit einem Reibbelag aus Sintermaterial, wobei im Reibbelag eine Aussparung vorgesehen wird, welche zumindest zwei voneinander beabstandete Bereiche umschließt, in denen die zumindest zwei Ausnehmungen des Trägers zur Aufnahme der Verbindungselemente angeordnet werden.

Weiterhin wird die Aufgabe der Erfindung mit einem Reibbelag nach dem Patentanspruch 6 gelöst, nämlich einem Reibbelag aus Sintermaterial, aufweisend zumindest zwei voneinander beabstandete Bereiche zur Aufnahme je eines Verbindungselementes zur Montage des Reibbelags auf einem Trägerelement, wobei die zumindest zwei Bereiche in einer gemeinsamen Aussparung im Reibbelag angeordnet sind.

Ebenso wird die Aufgabe der Erfindung durch ein Reibelement nach Anspruch 9 gelöst, nämlich ein Reibelement das den erfindungsgemäßen Reibbelag aufweist.

Erfindungsgemäß wird so die Rissbildung zwischen mehreren Aussparungen wirksam vermieden. Zwar vermindert sich dadurch die wirksame Reibfläche, jedoch kann dieser Einfluss im Gegensatz zu sich ablösenden Teilchen konstruktiv berücksichtigt werden, um so unliebsame Überraschungen zu vermeiden. Des Weiteren wird dem Ablösen einzelner Teile des Reibbelags vorgebeugt, sodass die Funktion von Kupplungen und Bremsen dadurch nicht mehr beeinträchtigt werden kann. Darüber hinaus wird auch die Gefahr der Zerstörung des Reibbelags durch aufgesinterte Teilchen wirksam reduziert. Daher ist ein erfindungsgemäßer Reibbelag deutlich sicherer als ein Reibbelag nach dem Stand der Technik. Der Erfindung liegt also unter anderem auch die Einsicht zugrunde, dass ein Reibbelag durch Weglassen eines Teiles sicherer gemacht werden kann, was a priori unlogisch erscheint, da ja durch die damit verbundene Verringerung der Reibfläche auch eine Verringerung der Reibleistung (also der Kupplungs- oder Bremsleistung) einhergeht. Schließlich wird auch die Kaltverformung des Reibbelags begünstigt.

Vorteilhafte Ausgestaltungen und Weiterbildungen der Erfindung ergeben sich aus den Unteranspruchen sowie aus der Beschreibung in Zusammenschau mit den Figuren der Zeichnung.

Vorteilhaft ist es, wenn die Aussparung zwischen den zumindest zwei Bereichen eine Einschnürung aufweist. Auf diese Weise kann die Rissbildung im Reibbelag beziehungsweise die Ablösung von Teilchen vermieden werden, ohne dass dadurch die wirksame Reibfläche maßgeblich verringert wird. Die Breite der Einschnürung kann dabei zwischen 0,5% bis annähernd 100% von der maximalen Breite der Aussparung (also zum Beispiel des Lochdurchmessers) betragen.

Vorteilhaft ist es weiterhin, wenn die Aussparung in den zumindest zwei Montagebereichen durch kreisförmige Abschnitte und dazwischen durch tangential anliegende, gerade Abschnitte begrenzt wird. Zwar ist die Verringerung der Reibfläche hier stärker, jedoch ist die Form der Aussparung - ein gerades Langloch mit runden Endbereichen - einfacher. Der Bereich zwischen den Aussparungen ist hier also so breit wie die Aussparung selbst, das heißt die Breite des Zwischenbereichs beträgt 100% von der Breite der Aussparung (also zum Beispiel wiederum des Lochdurchmessers). Dies gilt aber nur bei zwei Montagebereichen, bei drei und mehr Montagebereichen ergibt sich eine größere Breite.

Besonders vorteilhaft ist es, wenn die Aussparung bereits vor dem Sintervorgang beim Pressen des Sinterpulvers hergestellt wird. Die Aussparung kann somit bei der Formgebung des Reibbelaggrünlings berücksichtigt werden, sodass der Reibbelag nach dem Sintervorgang bzw. nach der Kalibrierung oder Umformung im Wesentlichen fertig ist. Auch wird das eingesetzte Material besser ausgenutzt, das heißt die in die Form des Reibbelags gefüllte Menge findet sich praktisch vollkommen im Reibbelag wieder.

Vorteilhaft ist es aber auch, wenn die Aussparung nach dem Sintervorgang durch eines oder mehrere der Verfahren: Fräsen, Sägen, Schneiden, Hobeln, Räumen, Schleifen, Stanzen oder thermisches Schneiden (zum Beispiel Laserschneiden, Brennschneiden oder Plasmaschneiden) hergestellt wird. In diesem Fall wird die Aussparung nach dem Sintervorgang hergestellt. Die Form für den Reibbelag kann somit einfacher gestaltet werden, jedoch ist ein zusätzlicher Arbeitsschritt zur Herstellung der Aussparung erforderlich. Diese Variante kann zum Beispiel dann Vorteile bieten, wenn Reibbeläge mit denselben Abmaßen aber verschiedenen Montage- oder Befestigungsbereichen hergestellt werden müssen. Damit einhergehend ist eine variierende Form der Aussparungen.

An dieser Stelle wird angemerkt, dass sich die zum erfindungsgemäßen Verfahren genannten Varianten und daraus resultierenden Vorteile selbstverständlich auch auf den erfindungsgemäßen Reibbelag beziehen, auch wenn die Varianten und Vorteile bloß zum erfindungsgemäßen Verfahren genannt wurden.

Die obigen Ausgestaltungen und Weiterbildungen der Erfindung können auf beliebige Art und Weise kombiniert werden.

Zum besseren Verständnis der Erfindung wird diese anhand der nachfolgenden Figuren näher erläutert.

Es zeigen jeweils in stark schematisch vereinfachter Darstellung:
- Fig. 1: einen Reibbelag und einen zugeordneten Träger nach dem Stand der Technik;
- Fig. 2: eine erste Ausführungsvariante eines erfindungsgemäßen Reibbelags mit einem zugeordneten Träger;
- Fig. 3: eine zweite Ausführungsvariante eines erfindungsgemäßen Reibbelags;
- Fig. 4a: eine dritte Ausführungsvariante eines erfindungsgemäßen Reibbelags;
- Fig. 4b: eine vierte Ausführungsvariante eines erfindungsgemäßen Reibbelags;
- Fig. 4c: eine fünfte Ausführungsvariante eines erfindungsgemäßen Reibbelags.

Einführend wird festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Ausführungsbeispiele zeigen mögliche Ausführungsvarianten eines erfindungsgemäßen Reibbelags, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Fig. 2 zeigt eine erste Ausführungsvariante eines erfindungsgemäßen Reibbelags 1, aufweisend eine Aussparung A, welche zwei voneinander beabstandete Bereiche B1 und B2 umschließt, die zur Aufnahme eines Verbindungselementes, insbesondere einer Niete, zur Anordnung des Reibbelags 1 auf einem Trägerelement 3, also Beispielsweise einer Kupplungsscheibe, vorgesehen sind. Zwischen den beiden Bereichen B1 und B2 weist die Aussparung A eine Einschnürung C mit der Breite z auf. Die wirksame Reibfläche wird wegen der Einschnürung C vorteilhaft nur wenig verringert.

Der sintertechnisch hergestellte Reibbelag 1 ist auf einem Träger 2 angeordnet. Insbesondere wird der Reibbelag 1 auf den Träger 2 aufgesintert, aufgeklebt oder mit diesem verlötet, bzw. sind auch andere Verbindungstechniken möglich. Der Träger 2 dient insbesondere dazu, um den Reibbelag 1 mit dem Trägerelement 3 zu verbinden. Dazu weist der Träger 2 im Bereich der Aussparung A im Reibbelag 1 zumindest zwei Ausnehmungen 4 bzw. Bohrungen auf, die einen kleineren Durchmesser aus voranstehend genannten Gründen aufweisen. Der Träger 2 kann durch eine Metallplatte aus Vollmaterial, z.B. aus Stahl oder einer anderen Legierung, wie dies aus dem Stand der Technik bekannt ist, gebildet sein.

Fig. 3 zeigt eine zweite Ausführungsvariante des erfindungsgemäßen Reibbelags 1, welcher dem Reibbelag 1 aus Fig. 1 sehr ähnlich ist. Anstelle der Einschnürung C wird die Aussparung A hier durch zumindest annähernd halbkreisförmige Abschnitte a bei den Bereichen B1 und B2 und dazwischen durch tangential an diesen Abschnitten a anliegende, gerade Abschnitte b begrenzt. Die Aussparung A weist somit eine besonders einfache Form auf. Die Breite z des Zwischenbereichs ist hier so groß wie der Durchmesser der kreisförmigen Abschnitte a.

Die Abschnitte a müssen nicht zwingend halbkreisförmig sein, es können auch andere Rundungen vorgesehen sein.

Strichliert ist in Fig. 3 gezeigt, dass die Aussparung A im Rahmen der Erfindung auch ausgebaucht sein kann, bezogen auf den Durchmesser der Abschnitte a, sodass also ein maximaler Durchmesser der Aussparung auch größer sein kann als der Durchmesser eines Abschnittes a. Es besteht auch bei dieser Ausführungsvariante die Möglichkeit, dass diese Aussparung im Bereich zwischen den beiden Abschnitten a nicht stetig verläuft, sondern z.B. bereichsweise mit einer Ausbauchung versehen ist, wie dies in Fig. 3 strichpunktiert angedeutet ist.

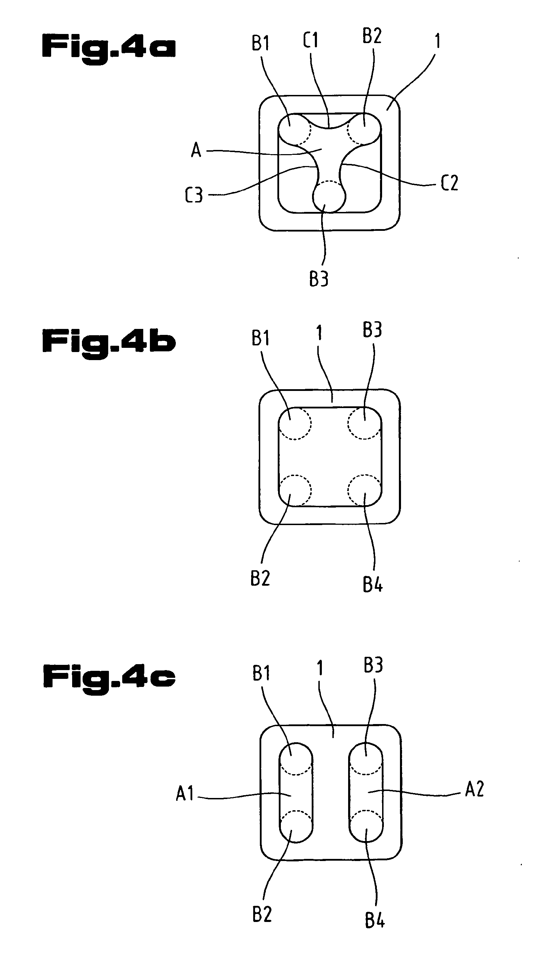

Fig. 4a zeigt eine dritte Ausführungsvariante eines erfindungsgemäßen Reibbelags 1, bei dem drei Bereiche B1 - B3 zur Aufnahme je eines Verbindungselementes zur Verbindung bzw. Anordnung des Reibbelags 1 mit bzw. auf einem nicht dargestellten Trägerelement vorgesehen sind. Die drei Bereiche B1 - B3 sind von einer einzigen Aussparung A umschlossen, welche zwischen den Bereichen B1 - B3 Einschnürungen C1 - C3 aufweist. Selbstverständlich ist es aber auch möglich, bei den Bereichen B1 - B3 - ähnlich wie in Fig. 3 - kreisförmige Abschnitte vorzusehen, die durch tangential anliegende Geraden verbunden sind.

Fig. 4b zeigt eine vierte Ausführungsvariante eines erfindungsgemäßen Reibbelags 1, bei dem vier Bereiche B1 - B4 zur Aufnahme je eines Verbindungselementes zur Verbindung bzw. zur Anordnung des Reibbelags 1 mit bzw. auf einem nicht dargestellten Trägerelement vorgesehen sind. Die vier Bereiche B1 - B4 sind wiederum von einer einzigen Aussparung A umschlossen, welche bei den Bereichen B1 - B4 durch kreisförmige Abschnitte und dazwischen durch tangential anliegende Geraden verbunden ist. Alternativ sind auch Einschnürungen zwischen den Bereichen B1 - B4 denkbar.

Fig. 4c zeigt eine fünfte Ausführungsvariante eines erfindungsgemäßen Reibbelags 1, bei dem ebenfalls vier Bereiche B1 - B4 zur Aufnahme je eines Verbindungselementes zur Verbindung bzw. zur Anordnung des Reibbelags 1 mit bzw. auf einem nicht dargestellten Trägerelement vorgesehen sind. Die vier Bereiche B1 - B4 sind aber nicht von einer einzigen Aussparung A umschlossen, sondern eine erste Aussparung A1 umschließt die Bereiche B1 und B2 und eine zweite Aussparung A2 umschließt die Bereiche B3 und B4.

Bei den Varianten nach den Fig. 3 bis 4c ist selbstverständlich auch der Träger 2 vorgesehen, auf dem der Reibbelag 1 aufgebracht ist und über den dieser mit dem Trägerelement 3 verbunden wird.

Selbstverständlich sind auch andere als die dargestellten Formen denkbar. Beispielsweise kann für einen Reibbelag 1 eine Mischform zwischen Fig. 2 und Fig. 3 vorgesehen werden. Etwa kann die linke Begrenzung analog zu der in Fig. 2 und die reche Begrenzung analog zu der in Fig.3 dargestellten Ausführungsform gestaltet sein. Bei Fig. 2 ist weiterhin vorstellbar, dass die Einschnürung C durch gerade, insbesondere parallele, Abschnitte gebildet ist.

Es ist weiterhin bei allen Ausführungsvarianten der Erfindung möglich, dass die Einschnürung(en) bzw. Ausbauchung(en) der Aussparung nicht durch einen gerundeten Verlauf begrenzt sind, sondern dass zumindest bereichsweise eine geradlinige Begrenzung vorgesehen wird.

Die Breite z des Zwischenbereichs liegt vorteilhaft zwischen 0,5% und 100% der Breite der Bereiche B1 und B2. Prinzipiell sind auch Breiten z des Zwischenbereichs von mehr als 100% vorstellbar, allerdings sollte dabei bedacht werden, dass eine vergrößerte Breite z mit einer verringerten Fläche des Reibbelags 1 und damit mit einer Verringerung der übertragbaren Reibleistung einhergeht.

Die Aussparungen A, A1 und A2 sind zur versenkten Aufnahme von Verbindungselementen vorgesehen, mit denen der Reibbelag 1 auf dem Trägerelement 3 über den Träger 2 befestigt wird. Der Reibbelag 1 kann dazu auf den Träger 2 aufgeklebt, aufgelötet oder auf andere Art ohne die Zuhilfenahme von Befestigungsmitteln wie Nieten oder Schrauben mit diesem verbunden werden.

Insbesondere ist das so aus Reibbelag 1 und Träger 2 gebildete Bauteil für eine Kupplung vorgesehen und mit Nieten auf einer Kupplungsscheibe montiert. Schließlich ist auch vorstellbar, dass Reibbelag 1, Träger 2 und ein weiterer Bauteil (etwa wieder die Kupplungsscheibe) in einem Arbeitsschritt miteinander vernietet oder verschraubt werden.

Die Aussparungen A, A1 und A2 erweisen sich auch in Hinblick auf eine nachträgliche Kaltverformung des Reibbelages 1, z.B. in Form einer konkaven oder konvexen Verformung durch Pressen, von Vorteil, um ein besseres Spannungsbild im Reibbelag 1 zu erhalten.

Die Begrenzungswände der Aussparungen A, A1 und A2 können - auch wenn dies in den Figuren nicht explizit dargestellt ist - geneigt sein.

Auch müssen die Aussparungen A, A1 und A2 keine kreisförmigen beziehungsweise zylinderförmigen Abschnitte aufweisen. Abweichungen von der Kreisbogenform sind durchaus möglich.

Auch hinsichtlich der Temperaturverteilung im Reibbelag 1 bei dessen Belastung können mit Hilfe der Aussparung Vorteile erzielt werden, wodurch die Standzeit des Reibbelages 1 ebenfalls verbessert werden kann.

Die Aussparungen A, A1 und A2 im Reibbelag 1 sind durch den Reibbelag 1 durchgehend ausgeführt.

Wie bereits voranstehend ausgeführt kann die Aussparung A bereits während des Pressens des Sinterpulvers hergestellt werden. Ebenso kann die Aussparung nachträglich in den Reibbelag 1 eingebracht werden, z.B. mit voranstehend erwähnten Verfahren, wenngleich dies aus Kostengründen nicht die bevorzugt Variante ist.

Der Reibbelag 1 wird mit dem Träger 2 insbesondere mit für diesen Zweck bekannten Klebern verklebt.

Der Reibbelag 1 kann aus einem für diese Verwendung aus dem Stand der Technik bekannten Sintermaterial bestehen.

Der Ordnung halber sei abschließend darauf hingewiesen, dass zum besseren Verständnis des Aufbaus des Reibbelags 1 dieser beziehungsweise dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 bis 4c gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Reibbelag
- 2: Träger
- 3: Trägerelement
- 4: Ausnehmung
- 5: Bund
- A1', A2': Aussparung Stand d. Technik
- A, A1, A2: Aussparung
- a: kreisförmiger Abschnitt
- b: gerader Abschnitt
- B1..B4: Montagebereiche
- C: Einschnürung
- z: Breite des Zwischenbereichs

## Patentansprüche

1. Verfahren zur Herstellung eines Reibelementes umfassend einen Reibbelag (1) aus Sintermaterial, der auf einen Träger (2) aufgebracht wird, wobei im Träger (2) zumindest zwei Ausnehmungen (4) zur Aufnahme je eines Verbindungselementes zur Montage des Trägers (2) mit dem Reibbelag (1) auf einem Trägerelement (3) vorgesehen werden, **dadurch gekennzeichnet, dass** im Reibbelag (1) eine Aussparung (A, A1, A2) vorgesehen wird, welche zumindest zwei voneinander beabstandete Bereiche (B1..B4) umschließt, in denen die zumindest zwei Ausnehmungen (4) des Trägers (2) zur Aufnahme der Verbindungselemente angeordnet werden.

2. Verfahren nach Anspruch 1, **dadurch gekennzeichnet, dass** die Aussparung (A) zwischen den zumindest zwei Bereichen (B1..B4) eine Einschnürung (C, C1..C3) aufweist.

3. Verfahren nach Anspruch 1, **dadurch gekennzeichnet, dass** die Aussparung (A, A1, A2) in den zumindest zwei Montagebereichen (B1..B4) durch kreisförmige Abschnitte (a) und dazwischen durch tangential anliegende, gerade Abschnitte (b) begrenzt wird.

4. Verfahren nach einem der Ansprüche 1 bis 3, **dadurch gekennzeichnet, dass** die Aussparung (A, A1, A2) vor dem Sintervorgang beim Pressen des Sinterpulvers hergestellt wird.

5. Verfahren nach einem der Ansprüche 1 bis 3, **dadurch gekennzeichnet, dass** die Ausspanmg (A, A1, A2) nach dem Sintervorgang durch eines oder mehrere der Verfahren: Fräsen, Sägen, Schneiden, Hobeln, Räumen, Schleifen, Stanzen oder thermisches Schneiden hergestellt wird.

6. Reibbelag (1) aus Sintermaterial, aufweisend zumindest zwei voneinander beabstandete Bereiche (B1..B4) zur Aufnahme je eines Verbindungselementes zur Montage des Reibbelags (1) auf einem Trägerelement (3), **dadurch gekennzeichnet, dass** die zumindest zwei Bereiche (B1..B4) in einer gemeinsamen Aussparung (A, A1, A2) im Reibbelag (1) angeordnet sind.

7. Reibbelag (1) nach Anspruch 6, **dadurch gekennzeichnet, dass** die Aussparung (A, A1, A2) zwischen den zumindest zwei Bereichen (B1..B4) eine Einschnürung (C, C1..C3) aufweist.

8. Reibbelag (1) nach Anspruch 6, **dadurch gekennzeichnet, dass** die Aussparung (A, A1, A2) in den zumindest zwei Montagebereichen (B1..B4) durch kreisförmige Abschnitte (a) und dazwischen durch tangential anliegende, gerade Abschnitte (b) begrenzt ist.

9. Reibelement umfassend ein Träger (2) auf dem ein Reibbelag (1) angeordnet ist, **dadurch gekennzeichnet, dass** der Reibbelag (1) nach einem der Anspruche 6 bis 8 gebildet ist.

## Claims

1. Method of producing a friction element comprising a friction lining (1) made from sintered material, which is applied to a support (2), and at least two recesses (4) are provided in the support (2), each for accommodating a connecting element for fitting the support (2) with the friction lining (1) on a supporting element (3), **characterised in that** a cut-out (A, A1, A2) is provided in the friction lining (1) which surrounds at least two regions (B1..B4) spaced apart from one another in which the at least two recesses (4) of the support (2) for accommodating the connecting elements are disposed.

2. Method as claimed in claim 1, **characterised in that** the cut-out (A) has a narrowed region (C1, C2..C3) between the at least two regions (B1..B4).

3. Method as claimed in claim 1, **characterised in that** the cut-out (A, A1, A2) in the at least two fitting regions (B1..B4) is bounded by circular portions (a) and tangentially adjoining straight portions (b) in between.

4. Method as claimed in one of claims 1 to 3, **characterised in that** the cut-out (A, A1, A2) is produced prior to the sintering process during the process of pressing the sinter powder.

5. Method as claimed in one of claims 1 to 3, **characterised in that** the cut-out (A, A1, A2) is produced after the sintering process by one or more of the methods: milling, sawing, cutting, planing, broaching, grinding, punching or thermal cutting.

6. Friction lining (1) made from sintered material, having at least two regions (B1..B4) spaced apart from one another, each for accommodating a connecting element for fitting the friction lining (1) on a supporting element (3), **characterised in that** the at least two regions (B1..B4) are disposed in a common cut-out (A, A1, A2) in the friction lining (1).

7. Friction lining (1) as claimed in claim 6, **characterised in that** the cut-out (A, A1, A2) has a narrowed region (C1, C2..C3) between the at least two regions (B1..B4).

8. Friction lining (1) as claimed in claim 6, **characterised in that** the cut-out (A, A1, A2) in the at least two fitting regions (B1..B4) is bounded by circular portions (a) and by tangentially adjoining straight portions (b) in between.

9. Friction element comprising a support (2) on which a friction lining (1) is disposed, **characterised in that** the friction lining (1) is of the type as claimed in one of claims 6 to 8.

## Revendications

1. Procédé de fabrication d'un élément de friction comprenant une garniture de friction (1) constituée d'un matériau fritté appliqué sur un support (2), aux moins deux évidements (4) étant prévus dans le support (2) pour le logement d'un élément de liaison pour le montage du support (2) avec la garniture de friction (1) sur un élément de support (3), **caractérisé en ce que**, dans la garniture de friction (1), une ouverture (A, A1, A2) est prévue, qui entoure au moins zones (B1 ... B4) distantes entre elles, dans lesquelles les au moins deux évidements (4) du support (2) sont disposés pour le logement des éléments de liaison.

2. Procédé selon la revendication 1, **caractérisé en ce que** l'ouverture (A) comprend, entre les au moins deux zones (B1 ... B4), au moins un rétrécissement (C, C1 ... C3).

3. Procédé selon la revendication 1, **caractérisé en ce que** l'ouverture (A, A1, A2) est limitée, dans les au moins deux zones de montage (B1 ... B4), par des découpes circulaires (a) et entre elles par des découpes droites tangentielles adjacentes (b).

4. Procédé selon l'une des revendications 1 à 3, **caractérisé en ce que** l'ouverture (A, A1, A2) est réalisée avant le processus de frittage lors du pressage de la poudre à fritter.

5. Procédé selon l'une des revendications 1 à 3, **caractérisé en ce que** l'ouverture (A, A1, A2) est réalisée, après le processus de frittage, à l'aide d'un ou de plusieurs des procédés suivants : fraisage, sciage, découpe, rabotage, brochage, rectification, estampage ou découpe thermique.

6. Garniture de friction (1) constituée d'un matériau fritté, comprenant au moins deux zones (B1 ... B4) distantes entre elles pour le logement d'un élément de raccordement pour le montage de la garniture de friction (1) sur un élément de support (3), **caractérisée en ce que** les au moins deux zones (B 1 ... B4) sont disposées dans une ouverture commune (A, A1, A2) dans la garniture de friction (1).

7. Garniture de friction (1) selon la revendication 6, **caractérisée en ce que** l'ouverture (A, A1, A2) comprend, entre les au moins deux zones (B1 ... B4), un rétrécissement (C, C1 ... C3).

8. Garniture de friction (1) selon la revendication 6, **caractérisée en ce que** l'ouverture (A, A1, A2) est limitée dans les au moins deux zones de montage (B1 ... B4) par des découpes circulaires (a) et entre celles-ci par des découpes droites tangentielles et adjacentes (b).

9. Elément de friction comprenant un support (2) sur lequel se trouve une garniture de friction (1), **caractérisé en ce que** la garniture de friction (1) est conçue selon l'une des revendications 6 à 8.
